# EUROPEAN PATENT SPECIFICATION

(11) **EP 4 155 065 B1**
(45) Date of publication and mention of the grant of the patent: **06.11.2024**
(21) Application number: 22197563.4
(22) Date of filing: 23.09.2022
(51) Int. Cl.: B30B 9/30, B65G 69/00

(54) **PRESS FOR COMPACTING WASTE MATERIAL WITH TRANSLATION DEVICE AND RELATED METHOD**
PRESSE ZUR VERDICHTUNG VON ABFALLMATERIAL MIT VERSCHIEBEVORRICHTUNG UND ENTSPRECHENDES VERFAHREN
PRESSE POUR LE COMPACTAGE DE DÉCHETS AVEC DISPOSITIF DE TRANSLATION ET PROCÉDÉ CORRESPONDANT

(30) Priority: 24.09.2021 IT 202100024542
(43) Date of publication of application: 29.03.2023
(73) Proprietor: Teuman S.r.l., 29010 Alseno (PC) (IT)
(72) Inventor: NICOLINI, Marco, 29010 ALSENO (PC) (IT)
(74) Representative: Silva, Valentina

(56) References cited:
- WO-A1-2016/153361
- IT-A1- PC20 090 009
- US-A- 4 181 460
- US-A- 5 765 986
- US-A1- 2005 191 158
- US-A1- 2012 189 414

## Description

### FIELD OF APPLICATION OF THE INVENTION

This invention fits in the field of presses whose function is to compact and reduce urban and similar solid waste into bales by reducing the volume thereof and facilitating the handling thereof.

### BACKGROUND

Various types of presses used for compacting urban or similar solid waste are known to the state of the art.

Said type of press is designed to solve problems arising from the storage and transport of considerable amounts of waste.

The function of this machine is in fact to compact and reduce the volume of urban and similar solid waste to facilitate the handling and storage thereof.

Said waste can be for example: paper, plastic, secondary solid fuel, etc.

Said presses generally comprise a compaction tunnel inside which a presser slides that compresses the material against an abutment, to form an agglomeration of waste generally called a "bale". Said abutment is configured to open and allow the transfer of the bale from the press to receiving means for transferring, for example, truck platforms.

The tunnel generally has a generally metallic structure having the shape of a parallelepiped supported on the ground by four legs.

The waste is normally inserted into the press by means of special conveyor belts, which unload by fall into a loading mouth of the press, for example a hopper operatively connected to the structure.

The waste is compacted by means of movable pressing means, e.g. connected to an oleodynamic compacting cylinder. The pressing means push the waste against the abutment by exerting the maximum pressure to form the compacted waste bale. Once compaction is finished, this abutment is raised, for example oleodynamically, leaving the entire internal section of the structure of the press completely free.

The pressing means then move the bale outside the structure of the press until it is completely transferred onto the means used for reception.

One problem with the transfer of the bale from the press over to the receiving means is that these do not always manage to position themselves in the correct way to receive the bale, which translates according to the direction of advancement of the pressing means. In fact, if the structure of the tunnel and the receiving means are not well aligned, the bale will not enter or will get caught against the receiving means. As the press rests on the ground on its legs, the only possibility of alignment is by adjusting the position of the receiving means. The receiving means are in fact generally trucks with relative container or loading platform and the correct alignment with the press requires several manoeuvres by the driver.

Document US 2012/189414 discloses a press and generically describes structural connection device that allow for positional adjustments, particularly rotations, without specifying any technical or positional details.

Document WO 2016/153361 describes a press according to the preamble of claim 1 with a single translation device arranged below and near the second end of the container structure.

### EXPOSURE AND ADVANTAGES OF THE INVENTION

The technical problem at the basis of the present invention is that of providing a press for compacting waste material, in particular preferably urban solids, structurally and functionally conceived to overcome one or more of the limits set out above with reference to the aforementioned prior art.

In the context of the aforementioned problem, a main object of the invention is that of developing a press for compacting waste material, in particular preferably urban solids, which allows the operations to transfer the pressed material or bale onto the receiving means to be simplified.

A further object of the invention is also that of providing to the art a press for compacting waste material, in particular preferably urban solids, within a simple, rational and rather low-cost solution.

In particular, the present invention provides a press Z with the features of claim 1 for compacting waste material, in particular preferably urban solids, comprising a compaction tunnel in communication with a hopper through which said waste material to be compacted is received, pressing means configured to translate within a structure of said tunnel which are configured to compress the waste material against an abutment element and to form a bale, said abutment element preferably located at a first end of the structure and movable in vertical direction, to define an opening through which the pressing means transfer said bale onto receiving means.

In particular, the structure of said tunnel is configured to cooperate with at least one translation device adapted to translate the structure on a plane parallel to the ground.

Thanks to this solution it is possible to position the press in such a way as to simplify and make the unloading of the bale to the receiving means safer.

Preferably, the translation device is configured to translate the structure in a transverse direction orthogonal to the longitudinal translation direction of the pressing means.

This enhances the translation safety of the bale to avoid collisions or impacts with the receiving means.

Preferably, the translation device comprises a fixed frame adapted to be fixed to the ground and a movable carriage mechanically connected to said structure and actuating means for translating the movable carriage with respect to the fixed frame.

The advantage of this solution is that it can be easily integrated into already existing presses.

Preferably said structure of the tunnel is shaped like a parallelepiped with a long side parallel to the ground.

A solution according to the invention comprises two translation devices arranged below and in proximity to the first end and in proximity to a second end of said structure.

This facilitates the positioning of the press, which can translate while remaining parallel to its starting position.

Preferably, the structure comprises support means integral therewith and facing the ground and configured to mechanically connect to the translation devices by distancing the structure from the ground.

This has the advantage of having the press at a height suitable for the receiving means with which it has to interface.

In particular, the support means comprise two pairs of legs each arranged in proximity to the first end and in proximity to the second end of said structure.

Preferably each translation device comprises two movable carriages connected below each leg.

In particular, the present invention also provides a method according to claim 8.

These and other objects are achieved thanks to the characteristics of the invention set forth in the independent claim 1 and 8.

The dependent claims outline preferred and/or particularly advantageous aspects of the invention.

### BRIEF DESCRIPTION OF THE DRAWINGS

These and other features will be more apparent from the following description of some embodiments illustrated by way of non-limiting example in the accompanying drawings.

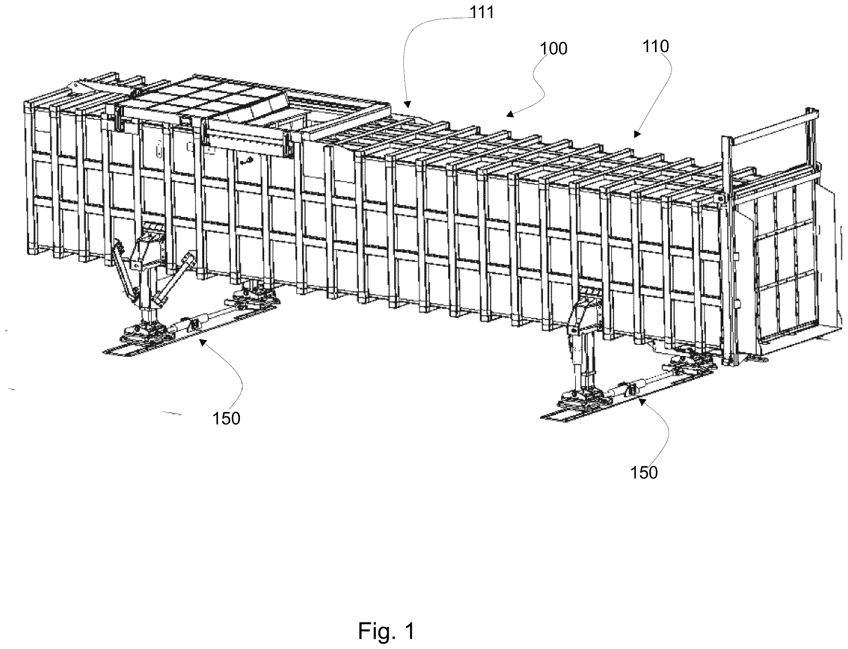

- Figure 1: illustrates an axonometric view of a press for compacting waste material according to the invention;

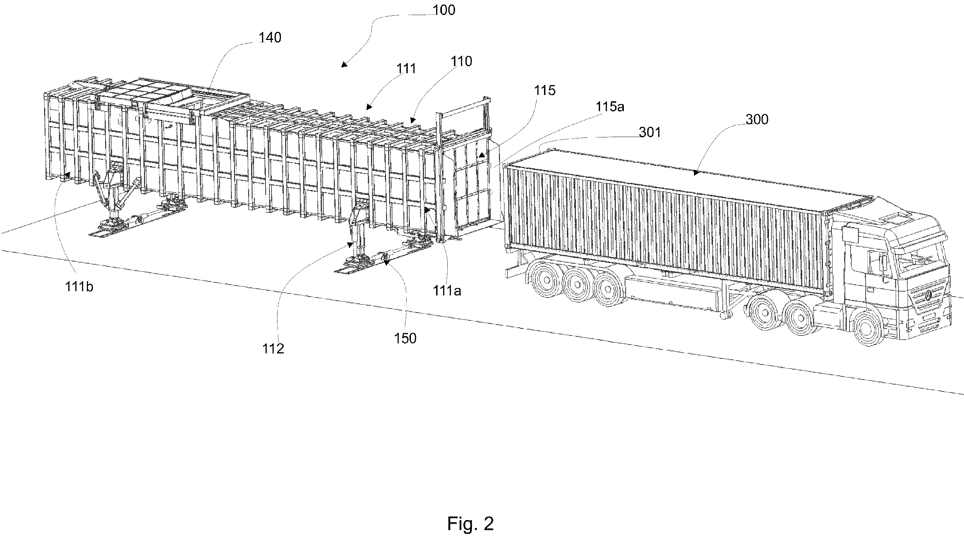

- Figure 2: illustrates an axonometric view of a press and relative receiving means;

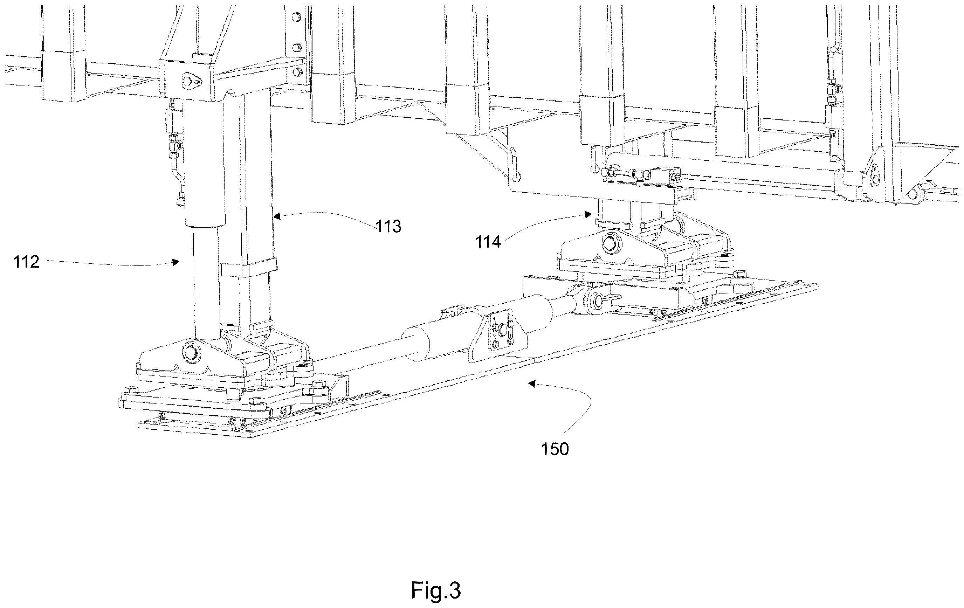

- Figure 3: illustrates an axonometric view of a detail of the press installed on the translation device;

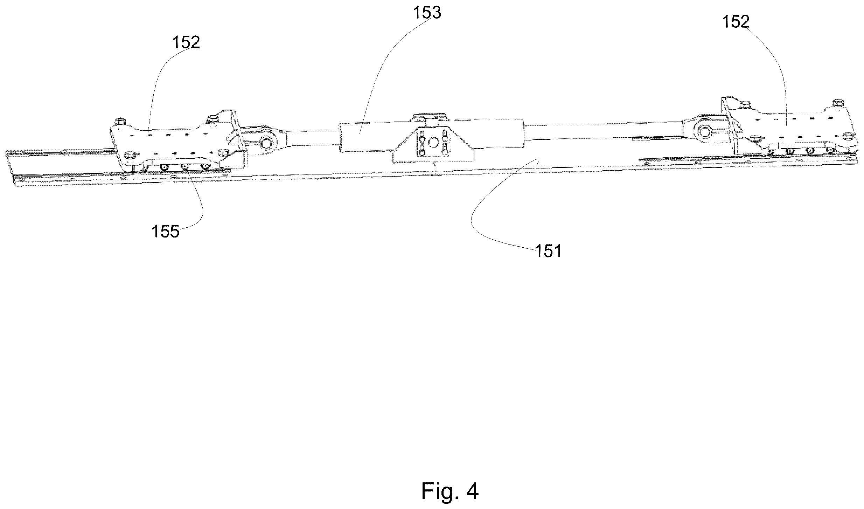

- Figure 4: illustrates an axonometric view of the translation device;

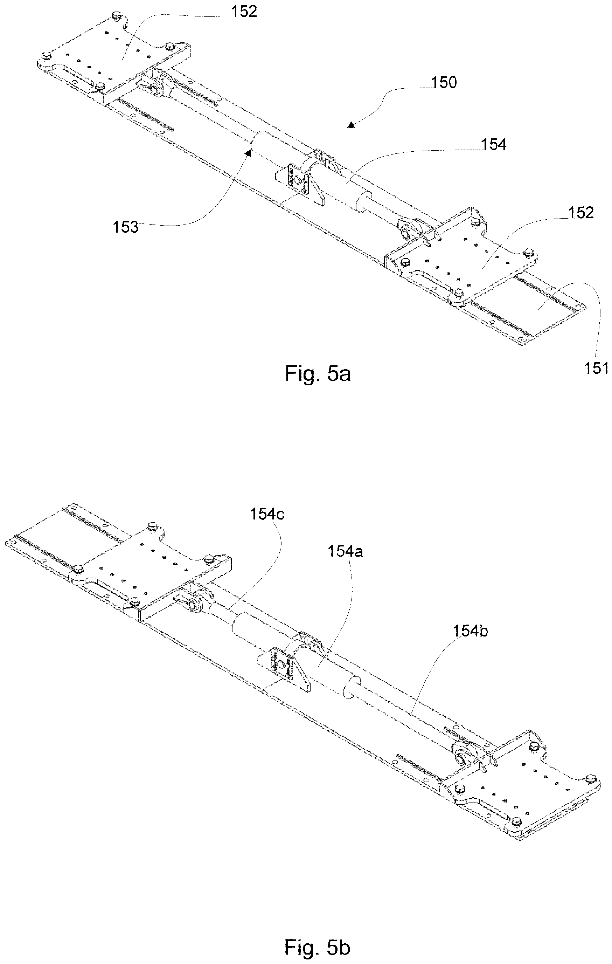

- Figure 5a, 5b: illustrates an axonometric view of the translation device in the two extreme positions;

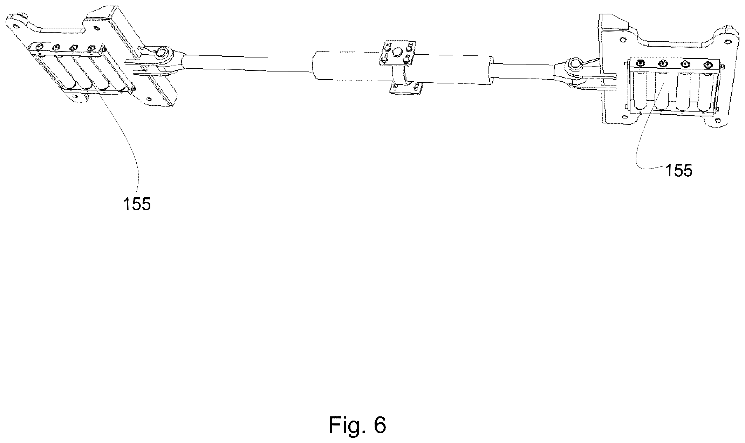

- Figure 6: illustrates an axonometric view of the translation device from below;
- Figure 7a, 7b, 7c: illustrates a plan view of a press with relative receiving means during the positioning steps;
- Figure 8a, 8b, 8c, 8d: illustrates in axonometric view a press with relative receiving means during the positioning steps;
- Figure 9a, 9b: illustrates an axonometric sectional view of a press with relative receiving means during the transfer of the bale.

### DESCRIPTION OF THE INVENTION

With particular reference to the figure, a press 100 for compacting waste material is depicted.

In particular it is preferably urban solid waste.

In fact, said type of press is designed to compact and reduce urban and similar solid waste into bales 200, reducing the volume thereof and facilitating the handling thereof.

Said bales 200 may have adjustable size and weight.

According to an embodiment of the invention depicted in the figures, said press comprises a compaction tunnel 110 configured to receive waste.

Said tunnel 110 is defined by a structure 111, preferably metallic resting on the ground.

A preferred embodiment provides that the structure 111 is shaped like a parallelepiped or case.

In particular the long side of the parallelepiped is parallel to the ground.

Preferably, said waste is inserted into the structure 111 of the tunnel 110 by means of a hopper 140.

As depicted in the figure, one embodiment provides that the waste enters the structure 111 by falling as the hopper 140 is located above the structure 111, on the side opposite the ground.

Thus the tunnel 110 is in communication with the hopper 140 through which said waste material to be compacted is received.

Preferably, the waste material to be compacted arrives at the hopper 140 by means of special conveyor belts, not depicted in the figure, which by unloading by fall into the hopper 140 fill the press 100.

The press 100 may comprise a hatch 141 arranged horizontally below the hopper 140.

Said hatch 141 can be configured to translate from an open position wherein it allows the passage of waste into a closed position wherein it closes the passage between the hopper 140 and the tunnel 110.

Before the press 100 starts compacting the waste, preferably said hatch 141, moved for example by an oleodynamic cylinder, isolates the compaction tunnel 110 from the hopper 140.

The press 100 further comprises pressing means 120 configured to slide within the structure 111 of said tunnel 111.

The translation of said pressing means 120 pushes the waste material against an abutment element 115 a until a sufficient pressure is exerted to compress said waste material and to form a bale 200.

Said pressing means 120 can translate by means of drive means preferably of the hydraulic type as they are able to exert high pressures.

Alternatively, solutions in which the drive means that move the pressing means 120 are of an electrical, pneumatic type, etc. also fall within the scope of protection of the invention.

Said pressing means may be, for example, a metal shovel having a size preferably similar to the internal cross-section of the structure 111 for obtaining a bale 200 with maximum size for said structure 111.

Said abutment element 115 is preferably located at a first end 111a of the structure 111.

In a preferred embodiment the abutment 115 defines a transverse wall, i.e. on the short side of the structure 111.

According to one aspect of the invention, said abutment 115 is movable in vertical direction to define an opening 115a that puts the tunnel 110 in communication with the outside.

Preferably, the size of the abutment 115 is such that it defines an opening 115a that leaves the entire internal section of the press 100 completely free.

In this way, the abutment 115 can pass from a closed position wherein it receives the thrust of the pressing means 120 during the waste compression step into an open position that allows the bale 200 thus formed to exit.

In fact through the opening 115a the pressing means 120 push the bale 200 and transfer it outside the structure 111 of the tunnel 110.

Thus the opening 115a will be larger than the size of the pressing means 120 that can exit therefrom for the complete ejection of the bale.

Said abutment 115 can be raised and lowered by means of movement means, for example of the oleodynamic type.

Also preferably the translation of the pressing means 120 is equally of the oleodynamic type. In the figure there is depicted a preferred embodiment that provides an oleodynamic cylinder with 3 extensions to be able to also perform the stroke that is additional to the compression stroke, to perform the ejection of the bale 200.

Said transfer generally provides that the bale 200 is received by receiving means 300.

Said receiving means 300 can be, for example, a truck with cases with closed structure or with a platform.

The conformation of the receiving means 300 generally comprises an inlet zone 301 through which the bale 200 is pushed.

It is therefore important that the receiving means 300 are correctly positioned with respect to the bale 100 to ensure the correct passage of the bale 200.

For example, the opening 155a of the structure 111 should be located at a short distance and in front of the inlet zone 301 of the receiving means 300.

To do this, the prior art provides that the receiving means 300 are those to adapt to the position of the press 100.

In fact, the press 100 is generally fixed to the ground; for example, it comprises a plurality of legs anchored to the ground.

Therefore, it is the operator guiding the receiving means 300 who must manoeuvre them so that the correct position for the bale 200 to be transferred over is reached.

An object of the invention is a preferred embodiment that provides that the structure 111 of said tunnel 120 is configured to cooperate with at least one translation device 150 adapted to translate the structure 111 on a plane parallel to the ground.

In fact, the structure 111 can translate parallel to the ground, maintaining at least a degree of freedom.

Thanks to this solution, the press 100 is not constrained to the ground in all directions, but can move by adapting to the position of the receiving means 300. Therefore, once the operator has positioned the receiving means 130 in a suitable position for unloading in proximity to the press, this position can be further corrected and optimised by displacing the structure 111 through activation of the translation device 150.

Preferably, the translation device 150 is configured to translate the structure 111 in a transverse direction X that is orthogonal to a longitudinal translation direction Y of the pressing means 120. Only one degree of freedom in the displacement of the structure 111 may be sufficient. Preferably the transverse translation direction X of the structure 111 is orthogonal to the longitudinal translation direction Y of the pressing means 120 i.e. the direction of exit of the bale 200.

In fact, the displacement in the transverse direction X allows the position of the opening 115a to be adjusted to that of the receiving means 300; in particular, so that said opening 115a is opposite the inlet zone 301 through which the bale 200 is pushed.

A misalignment of the opening 115a and of the inlet zone 301 may result in the bale 200 getting caught while it is transferred over, being damaged and losing some of its waste, as well as damaging the receiving means 300.

The second degree of freedom allowing a translation in the longitudinal direction Y may not be necessary as the manoeuvring capacity of the receiving means 300 may be sufficient since the bale 200 is of such a length that it can be translated even if there is a certain distance in the longitudinal direction Y between the opening 115a and the inlet zone 301.

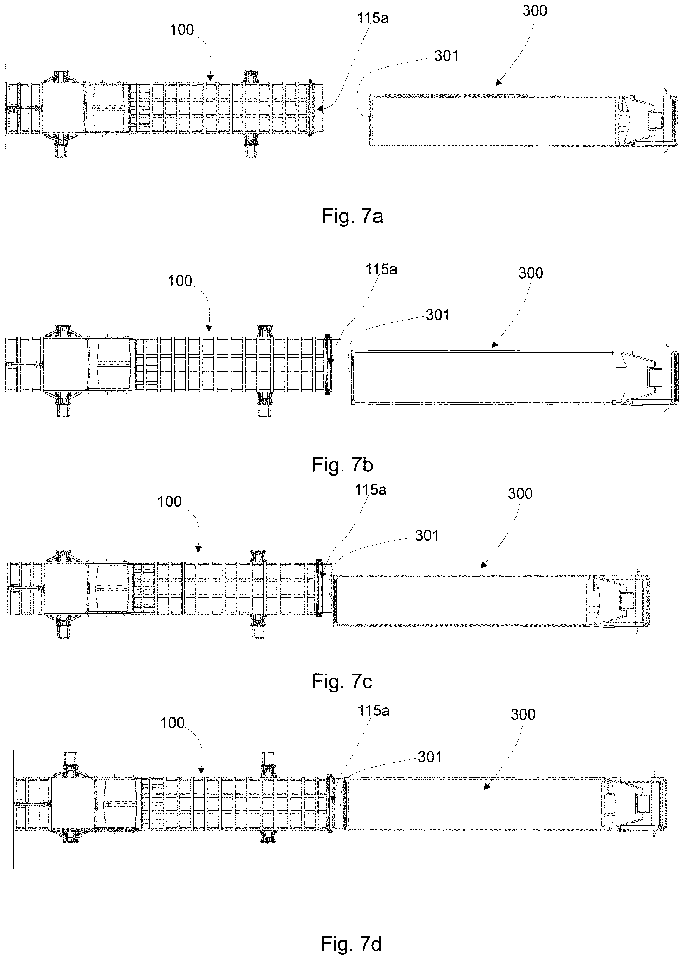

Figure 7 depicts an example of positioning steps involving an initial placement of the receiving means 300 with respect to the press 100 (Figures 7a,7b,7c) followed by a subsequent correction of the position of the press 100 (Figure 7d) by activation of the translation means, so that said opening 115a is opposite the inlet zone 301.

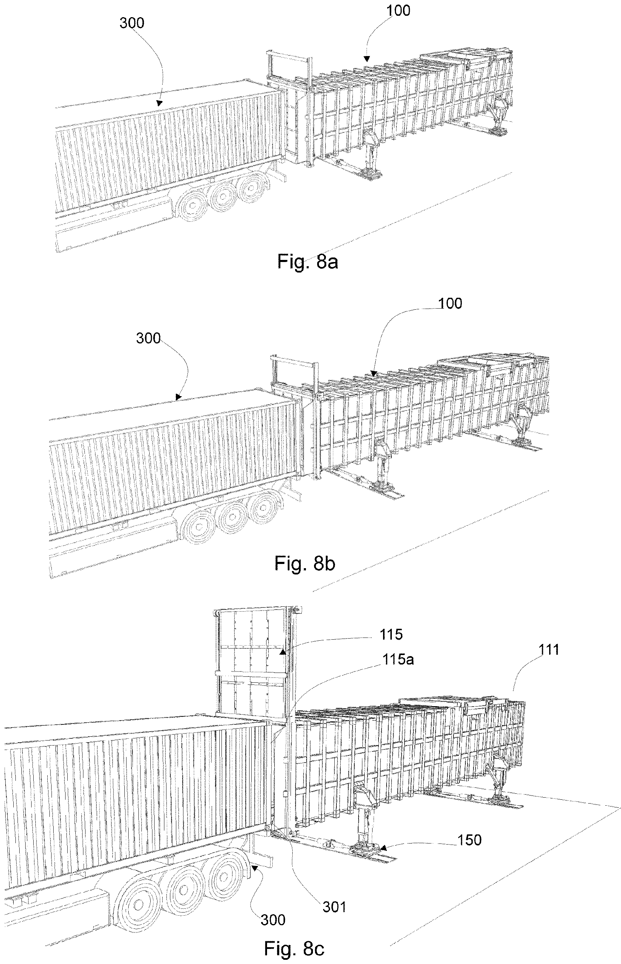

Figure 8 depicts an example of steps following the positioning of the receiving means 300 in which the position of the press 100 is corrected (Figure 8b) and then the abutment 115 is opened (Figure 8c).

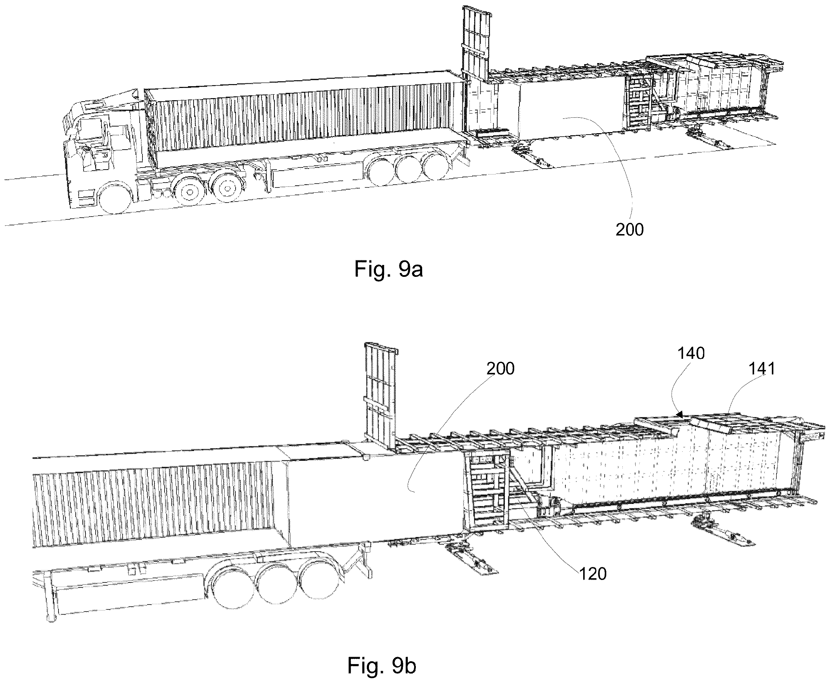

Figure 9 depicts an example of steps following the opening of the abutment 115 and in particular the steps of transferring the bale 200 from the press 100 (Figure 9a) to the receiving means 300 (Figure 9b).

In accordance with an aspect of the invention the translation device 150 comprises a fixed frame 151 adapted to be fixed to the ground and a movable carriage 152 mechanically connected to said structure 111 and actuating means 153 for translating the movable carriage 152 with respect to the fixed frame 151.

In this way, the displacements of the carriages 152 and therefore of the structure 111 are precisely controlled and commanded by the actuating means 153.

According to the invention, the press 100 comprises two translation devices 150 arranged below said structure 111 and in proximity to the first end 111a and in proximity to a second end 111b.

This allows the position of the entire press to be adjusted without stressing the structure 111. In fact, as depicted in the figures, the two translation devices 150 translate together so as to move both the first end 111a and the second end 111b of the structure 111 in the same direction and by the same amount.

As depicted in the figures, a preferred form provides that the structure 111 comprises support means 112 integral with the structure 111 itself and facing the ground.

Said support means 112 have the purpose of distancing the structure 111 from the ground and keeping it at a height adequate for the receiving means 300.

Said support means 112 preferably comprise two pairs of legs 113, 114 each pair arranged in proximity to the first end 111a and in proximity to the second end 111b of said structure 111.

In particular, each translation device 150 comprises two movable carriages 152 connected below each leg 113, 114.

Preferably, the actuating means 153 move both movable carriages 152 together and with the same displacement.

As depicted in the figures, for example, each translation device 150 may comprise two movable carriages 152 that translate on the fixed frame 151 by means of guide and sliding elements 155 interposed between each carriage 152 and the fixed frame 151 and configured to facilitate sliding and keeping it in the correct position.

The actuating means 153 may comprise a hydraulic type cylinder 154 for each carriage 152.

Alternatively, as depicted in the figure, the actuating means may comprise a single cylinder 154 with a single central body 154a and two stems 154b, 154c sliding in an opposed manner. Each stem 154b, 154c may be mechanically connected to the respective carriage 152, while the body 154a is mechanically connected to the fixed frame 151. However, it is understood that embodiment variables known to a person skilled in the art fall within the same scope of protection of the invention.

A preferred embodiment provides that said support means 112 can be raised, for example of a telescopic type and driven by hydraulic cylinders, as depicted in the figure; this allows to vary the height of the structure 111 from the ground adapting to the receiving means 300.

Said support means 112 are preferably configured to mechanically connect to the translation devices 150.

In this way, the press 100 can adjust its position both on a plane parallel to the ground, by means of the translation devices 150 and its height in a direction orthogonal to the ground by means of the support means 112.

An advantageous aspect of the invention is also that the press 100 may comprise a detection device, not depicted in the figure.

Preferably said detection device is adapted to detect the position of the receiving means 300.

Preferably, the detection device is configured to communicate said position to the actuating means 153 of the translation device 150 to translate the structure 111 so that its opening 115a faces a corresponding inlet zone 301 of the receiving means 300.

Said detection device may be, for example, a sensor, a camera, or whatever is available to a person skilled in the art to receive information on the position of the receiving means 300 with respect to the press 100.

Said detection means can directly communicate the information to the actuating means 153 to activate them by generating the displacement of the carriages 152 and of the structure 111. Alternatively, the detection means may provide, for example, an alarm to the operator who, by means of manual commands, activates the actuating means 153 for displacing the structure until the correct position is reached.

An object of the invention is also the method of making a bale 200 of waste material, in particular preferably urban solids within a press 100 which provides:
- receiving said waste material within a compaction tunnel 110,
- compressing the waste material within a structure 111 of the tunnel 110 against an abutment element 115,
- raising said abutment element 115 defining an opening 115a preferably located at a first end 111a of the structure 111,
- positioning the receiving means 300 with the inlet zone 301 in proximity to the opening 115a of the press 100,
   characterized in that said method provides
- translating the first end (111a) and/or the second rear end (111b) of said structure (111) parallel to the ground so that its opening 115a faces a corresponding inlet zone 301 of the receiving means 300,
- transferring the bale 200 onto the receiving means 300 through said opening 115a.

Preferably, the method provides for translating the structure 111 in a transverse direction X orthogonal to the longitudinal translation direction Y of the pressing means 120.

In particular, said method may provide for detecting the position of the receiving means 300 before translating, preferably parallel to the ground, the structure 111.

Said method may further provide for raising/lowering the structure to optimise the positioning of the opening 115a with respect to the entry zone 301.

It in any case is intended for that described above to be given by way of non-limiting example; therefore possible detail variants that may be required for technical and/or functional reasons are considered from now as to fall within the same protective scope defined by the claims below.

## Claims

1. Press (100) for compacting waste material, in particular preferably urban solids, comprising a compaction tunnel (110) in communication with a hopper (140) through which said waste material to be compacted is received, pressing means (120) configured to translate within a structure (111) of said tunnel (110), which are configured to compress the waste material against an abutment element (115) and to form a bale (200), said abutment element (115) preferably placed at a first end (111a) of the structure (111) and movable in vertical direction to define an opening (115a) through which the pressing means (120) transfer said bale (200) onto receiving means (300), **characterized in that** the structure (111) of said tunnel (110) comprises two translation devices (150) arranged below and in proximity to a first end (111a) and in proximity to a second end (111b) of said structure (111) adapted to translate the structure (111) on a plane parallel to the ground.

2. Press (100) according to any one of the preceding claims wherein the translation device (150) is configured to translate the structure (111) in a transverse direction (X) orthogonal to the longitudinal translation direction (Y) of the pressing means (120).

3. Press (100) according to any one of the preceding claims wherein the translation device (150) comprises a fixed frame (151) adapted to be fixed to the ground and a movable carriage (152) mechanically connected to said structure (111) and actuating means (153) for translating the movable carriage (152) with respect to the fixed frame (151).

4. Press (100) according to any one of the preceding claims, wherein said structure (111) of the tunnel (110) is shaped like a parallelepiped with a long side parallel to the ground.

5. Press (100) according to any one of the preceding claims wherein the structure (111) comprises support means (112) integral therewith and facing the ground and configured to mechanically connect to the translation devices (150) distancing the structure (111) from the ground.

6. Press (100) according to claim 5 wherein the support means (112) comprise two pairs of legs (113, 114) each pair arranged in proximity to the first end (111a) and in proximity to the second end (111b) of said structure (111).

7. Press (100) according to claim 6 wherein each translation device (150) comprises two movable carriages (152) connected below each leg (113, 114).

8. Method of making a bale (200) of waste material, in particular preferably urban solids, within a press (100), which provides:
- receiving said waste material within a compaction tunnel (110),
- compressing the waste material within a structure (111) of the tunnel (110), against an abutment element (115),
- raising said abutment element (115) defining an opening (115a) preferably located at a first end (111a) of the structure (111),
- translating the first end (111a) and/or the second rear end (111b) of said structure (111) parallel to the ground so that its opening (115a) faces a corresponding inlet zone (301) of the receiving means (300),
- transferring the bale (200) onto the receiving means (300) through said opening (115a).

## Patentansprüche

1. Presse (100) zum Verdichten von Abfallmaterial, insbesondere vorzugsweise von städtischen Feststoffen, umfassend einen Verdichtungstunnel (110) in Verbindung mit einem Trichter (140), durch den das zu verdichtende Abfallmaterial aufgenommen wird, Pressmittel (120), die so konfiguriert sind, dass sie sich innerhalb einer Struktur (111) des Tunnels (110) verschieben, und die so konfiguriert sind, dass sie das Abfallmaterial gegen ein Widerlagerelement (115) komprimieren und einen Ballen (200) bilden, wobei das Widerlagerelement (115) vorzugsweise an einem ersten Ende (111a) der Struktur (111) angeordnet und in vertikaler Richtung beweglich ist, um eine Öffnung (115a) zu definieren, durch die die Pressmittel (120) den Ballen (200) auf Aufnahmemittel (300) übertragen, **dadurch gekennzeichnet, dass** die Struktur (111) des Tunnels (110) zwei Translationsvorrichtungen (150) aufweist, die unten und bei einem ersten Ende (111a) und einem zweiten Ende (111b) der Struktur (111) angeordnet und so angepasst sind, um die Struktur (111) auf einer parallel zum Boden angeordneten Ebene, zu verlagern

2. Presse (100) nach einem der vorhergehenden Ansprüche, wobei die Translationsvorrichtung (150) so konfiguriert ist, dass sie die Struktur (111) in eine Querrichtung (X) orthogonal zur Längstranslationsrichtung (Y) der Pressmittel (120) verschiebt.

3. Presse (100) nach einem der vorhergehenden Ansprüche, wobei die Translationsvorrichtung (150) einen festen Rahmen (151) umfasst, der zur Befestigung am Boden geeignet ist, und einen beweglichen Schlitten (152) aufweist, der mechanisch mit der Struktur (111) verbunden ist, sowie Betätigungsmittel (153) zum Verschieben des beweglichen Schlittens (152) in Bezug auf den festen Rahmen (151).

4. Presse (100) nach einem der vorhergehenden Ansprüche, wobei die Struktur (111) des Tunnels (110) die Form eines Parallelepipeds mit einer langen Seite parallel zum Boden hat.

5. Presse (100) nach einem der vorhergehenden Ansprüche, wobei die Struktur (111) Stützmittel (112) umfasst, die mit ihr integral sind und zum Boden weisen und so konfiguriert sind, dass sie mechanisch mit den Translationsvorrichtungen (150) verbunden werden, wodurch die Struktur (111) vom Boden entfernt wird.

6. Presse (100) nach Anspruch 5, wobei die Stützmittel (112) zwei Paar Beine (113, 114) umfassen, wobei jedes Paar in der Nähe des ersten Endes (111a) und in der Nähe des zweiten Endes (111b) der Struktur (111) angeordnet ist.

7. Presse (100) nach Anspruch 6, wobei jede Translationsvorrichtung (150) zwei bewegliche Schlitten (152) umfasst, die unter jedem Bein (113, 114) verbunden sind.

8. Verfahren zum Herstellen eines Ballens (200) aus Abfallmaterial, insbesondere vorzugsweise aus städtischen Feststoffen, in einer Presse (100), das Folgendes umfasst:
- Aufnehmen des Abfallmaterials in einem Verdichtungstunnel (110),
- Komprimieren des Abfallmaterials in einer Struktur (111) des Tunnels (110) gegen ein Widerlagerelement (115),
- Anheben des Widerlagerelements (115), wodurch eine Öffnung (115a) definiert wird, die sich vorzugsweise an einem ersten Ende (111a) der Struktur (111) befindet,
- Verschieben des ersten Endes (111a) und/oder des zweiten hinteren Ende (111b) der Struktur (111) parallel zum Boden, so dass ihre Öffnung (115a) einer entsprechenden Einlasszone (301) der Aufnahmeeinrichtung (300) zugewandt ist,
- Übertragen des Ballens (200) auf die Aufnahmeeinrichtung (300) durch die Öffnung (115a).

## Revendications

1. Presse (100) pour compacter des déchets, en particulier de préférence des solides urbains, comprenant un tunnel de compactage (110) en communication avec une trémie (140) par laquelle sont reçus lesdits déchets à compacter, des moyens de pressage (120) configurés pour se déplacer en translation à l'intérieur d'une structure (111) dudit tunnel (110), qui sont configurés pour comprimer les déchets contre un élément de butée (115) et pour former une balle (200), ledit élément de butée (115) étant de préférence placé à une première extrémité (111a) de la structure (111) et étant mobile dans la direction verticale pour définir une ouverture (115a) par laquelle les moyens de pressage (120) transfèrent ladite balle (200) sur des moyens de réception (300), **caractérisée en ce que** la structure (111) dudit tunnel (110) comprend deux dispositifs de translation (150) placés au dessous et en proximité d'une première extrémité (111a) et en proximité d'une deuxième extrémité (111b) de ladite structure (111) adaptés pour une translation de la structure (111) sur un plan parallèle au sol.

2. Presse (100) selon l'une quelconque des revendications précédentes, dans laquelle le dispositif de translation (150) est configuré pour une translation de la structure (111) selon une direction transversale (X) orthogonale à la direction de translation longitudinale (Y) des moyens de pressage (120).

3. Presse (100) selon l'une quelconque des revendications précédentes, dans laquelle le dispositif de translation (150) comprend un cadre fixe (151) adapté pour être fixé au sol et un chariot mobile (152) relié mécaniquement à ladite structure (111) et des moyens d'actionnement (153) pour une translation du chariot mobile (152) par rapport au cadre fixe (151).

4. Presse (100) selon l'une quelconque des revendications précédentes, dans laquelle ladite structure (111) du tunnel (110) a la forme d'un parallélépipède dont un côté long est parallèle au sol.

5. Presse (100) selon l'une quelconque des revendications précédentes, la structure (111) structure (111) comprend des moyens de support (112) solidaires de celle-ci et tournés vers le sol et configurés pour se connecter mécaniquement aux dispositifs de translation (150) en éloignant la structure (111) du sol.

6. Presse (100) selon la revendication 5, dans laquelle les moyens de support (112) comprennent deux paires de jambes (113, 114), chaque paire étant disposée à proximité de la première extrémité (111a) et à proximité de la deuxième extrémité (111b) de ladite structure (111).

7. Presse (100) selon la revendication 6, dans laquelle chaque dispositif de translation (150) comprend deux chariots mobiles (152) reliés sous chaque jambe (113, 114).

8. Procédé de fabrication d'une balle (200) de déchets, notamment de préférence de matières solides urbaines, au sein d'une presse (100), qui prévoit :
- la réception desdits déchets au sein d'un tunnel de compactage (110),
- la compression des déchets au sein d'une structure (111) du tunnel (110), contre un élément de butée (115),
- la remontée dudit élément de butée (115) définissant une ouverture (115a) située de préférence à une première extrémité (111a) de la structure (111),
- la translation de la première extrémité (111a) et/ou de la deuxième extrémité (111b) de ladite structure (111) parallèle au sol de sorte que son ouverture (115a) soit en regard d'une zone d'entrée (301) correspondante du moyen de réception (300),
- le transfert de la balle (200) sur le moyen de réception (300) à travers ladite ouverture (115a).
